# EUROPEAN PATENT APPLICATION

(11) **EP 4 302 911 A1**
(43) Date of publication of application: **10.01.2024**
(21) Application number: 23182037.4
(22) Date of filing: 28.06.2023
(51) Int. Cl.: B23K 9/04, B23K 15/00, B23K 26/03, B23K 26/08, B23K 26/342, B23K 26/70, B23K 37/06, B33Y 10/00, B33Y 30/00, B33Y 40/20

(54) **AN APPARATUS FOR APPLYING A COMPRESSIVE LOAD**

(30) Priority: 08.07.2022 IT 202200014431
(71) Applicant: Ge Avio S.r.l., Rivalta di Torino (IT)
(72) Inventor: Peradotto, Edoardo Maria, 10040 Rivalta di Torino (IT); De Grassi, Alessandro, 10040 Rivalta di Torino (IT)
(74) Representative: Hafner & Kohl PartmbB

(57) **Abstract**

A directed energy deposition additive manufacturing system may include an apparatus for applying a compressive load to a component being built in the system with an overhanging geometry. The apparatus has a compression head that applies the compressive load. The apparatus may apply the compressive load at a compression angle that may be complementary to an inclination angle of the component. The apparatus may operate in multiple degrees of freedom.

## Description

### TECHNICAL FIELD

The present disclosure generally relates to an apparatus for applying a compressive load to a component.

### BACKGROUND

Additive manufacturing is a suite of emerging technologies that may be used to fabricate three-dimensional objects directly from digital models through an additive process, typically by depositing material layer upon layer and joining successive layers in place. Directed energy deposition ("DED") is a type of additive manufacturing process utilized to fabricate new parts and/or to repair or add additional material to existing components. Using DED, components can be made (or repaired) in a layer-by-layer fashion using a directed flow of feedstock material from a deposition head or nozzle.

In DED, compression may be applied to each layer or a set of layers after being deposited, and may thus involve an apparatus for applying compression during a compression phase such as by, for example, peening, hammering, rolling, and the like. Existing compression apparatuses apply the load in a vertical direction (i.e., perpendicular to the build plate) and are useful for components having bulk geometries and those with low aspect ratios.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 illustrates a DED additive manufacturing system, according to one or more embodiments of the present disclosure;
FIG. 2 is side view of a compression rig of the DED additive manufacturing system of FIG. 1;
FIG. 3 is a side view of an alternate compression rig that may be utilized with the system of FIG. 1;
FIG. 4A illustrates an alternate DED additive manufacturing system, according to one or more other embodiments of the present disclosure;
FIG. 4B is a front view of the DED additive manufacturing system of FIG. 4A; and
FIG. 4C is a detailed view of a compression rig of the DED additive manufacturing system of FIGS. 4A-4B.

### DETAILED DESCRIPTION

Depending on the geometry of the component, application of compression force may cause distortion or failure in a portion of the component. For example, application of a compressive load on an overhanging or angled portion of a structure along a vertical axis can cause damage or even failure of the component due to the force. Accordingly, the embodiments described herein provide a compression rig which may be utilized, such as in a DED additive manufacturing system, wherein the compression rig is configured to apply a compressive load and direct the compressive load at different orientations or attitudes depending on the geometry of the component. While the compression rigs of this description are described in the anticipated use environment of a DED additive manufacturing system, the compression rigs have applicability in other environments, and are not limited to use in just DED environments. The presently disclosed compression rigs are capable of having two (2) or more degrees of freedom. Also, the presently disclosed compression rigs may control the direction at which the compressive load is applied in real time during manufacture of the component and may adapt or vary the angular direction at which the compressive load is applied on a layer-by-layer basis to minimize the risk of damage or failure in the component.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom, upper, lower - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

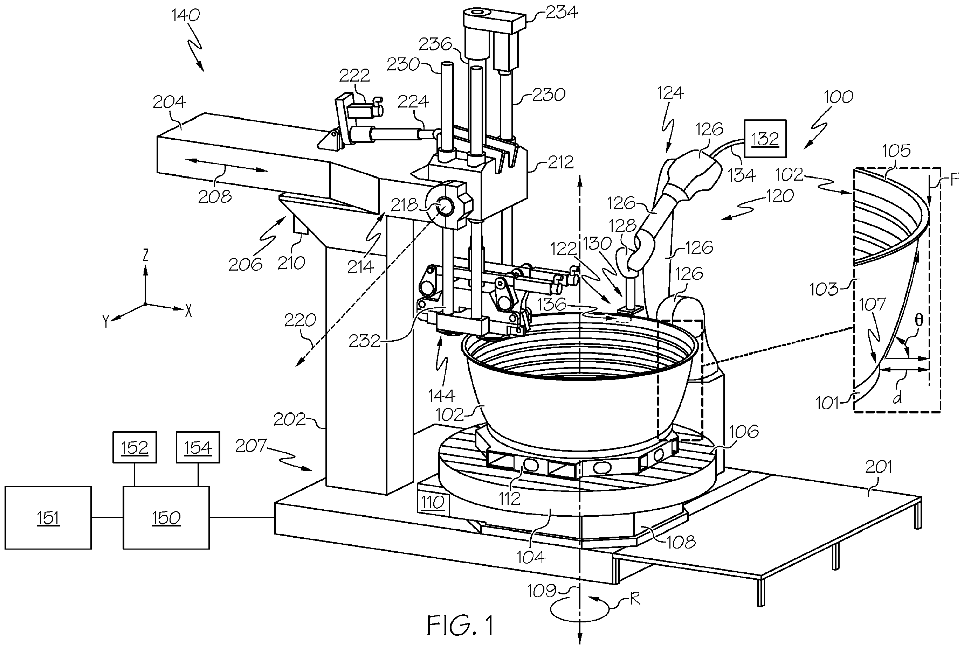

Referring now to FIG. 1, a DED additive manufacturing system 100 (hereinafter, the system 100) is illustrated according to one or more embodiments described herein. The system 100 is configured to construct or build a component 102 from a feedstock material. In the illustrated example, the component 102 is a cylindrically shaped component, but in other examples, the component 102 may have a different geometry.

Also in the illustrated embodiment, the component 102 includes a base 101 and a sidewall 103 formed on the base 101. As shown, the sidewall 103 extends radially outward, as evaluated in an X-Y plane defined by the coordinate axes of FIG. 1, beyond a peripheral edge of the base 101, such that an upper rim 105 of the sidewall 103 is not supported by the base 101 when evaluated in the Z-dimension in the coordinate axes depicted in the figure. In the illustrated embodiment, the X-Y plane is a horizontal plane. Also, when evaluated in the X-Z plane, the sidewall 103 extends from the base 101 along an inclination axis at an inclination angle Θ such that the sidewall 103 overhangs the base 101 by a distance d. Accordingly, the component 102 may be considered to have an overhanging geometry due to the sidewall 103 extending at the inclination angle Θ relative to a horizontal plane. Stated differently, the sidewall 103 represents an overhanging portion of the component 102. It should be appreciated, however, that the component 102 represents just one example overhanging geometry, and that the component 102 may be provided with various other overhanging geometries without departing from the present disclosure, for example, the sidewall 103 may extend radially inward, as evaluated in the X-Y plane, such that the sidewall 103 converges toward itself in a conical or frustoconical manner. Applying a compressive load along a direction that the component 102 is growing (e.g., in the Z-dimension) introduces strain at the core of the component 102. However, it is not always feasible to apply compressive loads in the Z-dimension to such overhanging geometries because, with this geometry, application of a normal force F on the upper rim 105 of the component 102 may result in failure in the component 102. For example, such application of the normal force F may cause a crack or fracture to form, such as at the upper rim 105 and/or in a region 107 of the component 102 where the sidewall 103 meets the base 101 due to excessive stress.

As illustrated, the system 100 includes a build table 104. At least a portion of the build table 104 is configured to rotate about an axis of rotation 109 of the build table 104, thereby rotating the component 102 supported on the build table 104. Thus, the build table 104 is a rotary build table. In particular, the build table 104 defines a build surface 106 on which the component 102 is built and supported. In the illustrated embodiment, the build surface 106 defines a build plane and is horizontal, and the build table 104 is disposed on a base 108. The base 108 may include an actuator 110 that moves (rotates) the build table 104 about the axis of rotation 109 in a clockwise or counterclockwise rotation direction. In the illustrated embodiment, the actuator 110 rotates the build table 104 in a counterclockwise direction R about the axis of rotation 109. Also, as hereinafter described, the actuator 110 rotates the build table 104 at a variable rotation speed. In some examples, the base 108 is further configured to move (translate) the build table 104 vertically along the axis of rotation 109 (e.g., in the Z-dimension depicted in FIG. 1).

In the illustrated embodiment, a pallet 112 is provided on the build surface 106 of the build table 104 and the component 102 is built on the pallet 112. In this manner, upon completion of manufacturing the component 102, a forklift or other material handling equipment may be utilized to engage the pallet 112 and remove the component 102, which has been finished, from the build table 104. Where utilized, the pallet 112 may be selectively secured to the build table 104, for example, with mechanical fasteners and/or a locking system.

The system 100 also includes a deposition assembly 120. The deposition assembly 120 has a deposition head 122 through which a stream of feedstock material may be deposited to fabricate the component 102. As described herein, the feedstock material is melted and deposited or output from the deposition head 122, as a stream of melted feedstock material, at a deposition rate. The deposition assembly 120 includes a structure that adjustably and movably supports the deposition head 122. In the illustrated example, the deposition assembly 120 includes a robotic arm 124 comprising a plurality of links 126 that may articulate relative to each other so as to adjust the position of the deposition head 122 which is supported on a distal most link 128 of the plurality of links 126. Accordingly, it should be understood that the deposition head 122 and the build table 104 are movable relative to each other. For example, the robotic arm 124 may include one or more actuators that rotates the links 126,128 of the robotic arm relative to one another so as to move the robotic arm 124 and the deposition head 122 supported thereon relative to the build table 104. It will be appreciated that the robotic arm 124 may have various other configurations for moving and adjusting the position of the deposition head 122 in multiple degrees of freedom without departing from the present disclosure.

The deposition assembly 120 includes an energy source 130 and a material source 132. The material source 132 is configured to convey the feedstock material to the deposition head 122 where it is deposited on the build table 104. In the illustrated embodiment, the material source 132 is a material spool and feeder system configured to convey a wire 134 (e.g., a metal or polymer-based wire) to the deposition head 122. Thus, the material source 132 may house the wire 134 that is fed to the deposition head 122. For example, the wire 134 may be routed externally of the robotic arm 124 to the deposition head 122 or through an internal cavity of the robotic arm 124 that connects to the deposition head 122. In other embodiments, rather than being a material spool and feeder system configured to convey the wire 134, the material source 132 may comprise a pressurized powder source that conveys a pressurized stream of powder feedstock material to one or more material delivery devices (e.g., nozzles, valves, or the like) of the deposition head 122. Any suitable feedstock material capable of being used in DED processes may be used consistent with the present disclosure.

The energy source 130 may take various forms depending on the implementation. In the illustrated example, the energy source 130 is a plasma transferred arc heat source. In other examples, the energy source 130 may include a laser source and optics configured to direct a laser beam having a desired energy density to the component 102 being constructed on the build surface 106 of the build table 104. In some examples, the energy source 130 may include an electron emitter connected to a power supply and at least one focusing coil configured to direct an electron beam to the component 102 being constructed on the build surface 106 of the build table 104. In such embodiments, the build table 104 may be placed in a build chamber (not depicted) under a vacuum or having an oxygen-reduced environment. However, the energy source 130 may take various other forms, such as a plasma source, an electron beam source, etc. In embodiments, the energy source 130 may comprise multiple energy sources, such as a laser source and a plasma transferred arc.

It should be understood that the system 100 may include any number of energy sources and material sources in accordance with the present disclosure. Additionally, feedstock material from the material source 132 may be routed to the deposition head 122 in various ways for emission onto the build table 104. For example, in embodiments, the wire 134 from the material source 132 may be divided into two or more material feeds that are routed through the robotic arm 124 into the deposition head 122. Each material feed may exit the deposition head 122 at a separate delivery nozzle as a material stream.

In operation, one or more streams of feedstock material are fed into a path of an energy beam from the energy source 130 and emitted by the deposition head 122 as a stream of melted feedstock material. In particular, at points of overlap between the energy beam and the stream(s) feedstock material where the energy beam possesses the requisite energy density, the energy beam may heat the feedstock material to a sufficient extent to form a melt pool 136 on the build surface 106. Melted feedstock material may continuously be fed through and deposited from the deposition head 122 such that the melt pool 136 forms a pattern corresponding to the movement pattern of the deposition head 122 and the build table 104. Movements of the deposition head 122 and the build table 104 may be determined based on a desired shape of the component 102 being built such that, as the melt pool 136 cools, the feedstock material hardens to form a portion of the component 102. For example, rotation of the build table 104 about the axis of rotation 109 as the deposition head 122 deposits the melt pool 136 results in a circular shaped stream of melted feedstock material that, as the build table 104 continuously rotates over time, will layer upon itself and build a cylindered shaped component, such as the component 102. Also, the robotic arm 124 may position the deposition head 122 radially, towards or away from the axis of rotation 109, so as to create a non-circular shaped component with a varying size and diameter as illustrated.

The system 100 further includes a compression rig 140. The compression rig 140 is positioned proximate the deposition assembly 120 and operable to continuously apply a compressive load to the deposited feedstock material which forms the component 102. In the illustrated embodiment, the compression rig 140 includes at least one actuator and a load source 144, as further described below.

Generally, the at least one actuator is configured to move and manipulate orientation of the load source 144 relative to the portion of the component 102 to which compressive load is to be applied. The load source 144 applies a force to the deposited material to introduce the required strain level in the deposited layer and/or improve mechanical properties of the component 102 for example, grain refinement and recrystallization. The load source 144 may have various configurations suitable for applying the compressive load as described herein and, in the illustrated embodiments, the load source 144 is a compression head configured to apply the compressive load via one or more rollers.

In embodiments, the system 100 may further comprise a controller 150. The controller 150 may be communicatively coupled to the build table 104, the deposition assembly 120, the compression rig 140, and/or the material source 132. Thus, the controller may be in communication with the base 108, the robotic arm 124, and/or the compression rig 140 so as to control operation of any one or more of the same. For example, the controller 150 may comprise a processor and memory storing computer readable instructions which, when executed by the processor, dynamically controls rotation direction and/or rotation speed of the build table 104 about the axis of rotation 109, vertical translation of the build table 104 along the axis of rotation 109, position and orientation of the deposition head 122 in space via the robotic arm 124, position and orientation of the load source 144 in space, and/or the magnitude of compressive load applied by the load source 144. The controller 150 may also be configured to control the feed rate at which the material source 132 supplies or feeds the feedstock material to the deposition head 122 and/or control the deposition rate at which the stream of melted feedstock material is output from the deposition head 122. As described herein, the controller 150 may control the orientation or attitude at which the compression rig 140 applies the compressive load.

In embodiments, the system 100 may have various sensors communicatively coupled to the controller 150, and the controller 150 may utilize data communicated from the various sensors to control operation of the build table 104, the deposition assembly 120, the compression rig 140, and/or the material source 132 as may be desired for fabricating the component 102. In some examples, a sensor system 151 may be provided that scans the component 102 so as to measure the dimensions of the component 102 as it is being formed. For example, lasers or cameras could be utilized to monitor the geometry of the component 102 and, upon determining certain geometries (e.g., that the component 102 has an overhanging geometry), cause the compression rig 140 to direct application of the compressive load at an attitude or orientation that will minimize risk of damaging the component 102 when the compressive load is applied. In some embodiments, a model of the component is stored in a memory of the controller 150, and the system 100 may determine geometry of the component 102, such as the inclination angle Θ thereof, by referencing and analyzing the stored model. As hereinafter described, the stored model and/or the sensor system 151 may be utilized to determine a change in the inclination angle Θ of the component 102 such that an angle at which the compressive load is applied may be adjusted based on the change. Also, the sensors may monitor the component 102 as it is built and the angle at which the compressive load is applied may be adjusted based on a change in the inclination angle Θ due to distortion of the part, for example, due to thermal shrinkage. However, in embodiments, the stored model may be pre-compensated to account for the movements of the component 102 during the manufacturing process and its heating/cooling.

In some examples, the system 100 includes one or more temperature sensor 152 and/or one or more stress sensor 154. The temperature sensor 152 is configured to measure a surface temperature of the layer of feedstock material deposited via the deposition head 122 inside and/or outside of the melt pool 136. In some embodiments, the temperature sensor 152 may include at least one pyrometer or thermal camera configured to measure the actual surface temperature of the deposited feedstock material. The temperature sensor 152 is communicably coupled to the controller 150 (e.g., associated with a remainder of the system 100) which includes control logic that evaluates the measurements of the temperature sensor 152. In some embodiments, the controller 150 is configured to control relative position between the deposition head 122 and the load source 144 based on the measurements of the temperature sensor 152. For example, the controller may cause movement of the deposition head 122 nearer or further from the load source 144 so as to ensure that the compressive load is being applied to material having a desired constant temperature. If a measurement of the temperature sensor 152 indicates that a previously deposited feedstock material is not suitable for compression or not uniform with previously compressed feedstock material, the controller 150 may transmit control signals to the actuator 110 of the build table 104 to vary rotation speed and/or transmit control signals to the robotic arm 124 to adjust a positioning of the deposition head 122.

Referring still to FIG. 1, in embodiments, the stress sensor 154 may be configured to measure a residual stress in the layer of feedstock material after the compression treatments are performed via the load source 144. The stress sensor 154 is communicably coupled to the controller 150 (e.g., associated with a remainder of the system 100) which includes control logic that evaluates the readings of the stress sensor 154. The stress sensor 154 may include an ultrasonic stress sensor or the like. In embodiments, the controller 150 may be configured to determine if the stress measurements obtained via the stress sensor 154 are within an acceptable threshold to ensure high build quality. In embodiments, if an unacceptable amount of residual stress is detected, the controller 150 may modify operation of the compression rig 140 (e.g., by modifying the load application parameters such as force magnitude, force orientation or attitude, and the like) to correct for the residual stress in the component 102 being outside of an acceptable range, wherein residual stress may be the combination of thermal stress given by the cooling after deposition and the mechanical stress caused by compression. In embodiments, if an unacceptable amount of residual stress is detected, the controller 150 may modify various operating parameters associated with the deposition head 122 (e.g., energy beam power, movement speed, material feed rate) to reduce residual stress in the component 102.

In the illustrated example, the deposition head 122 deposits feedstock material to fabricate the component 102 on the build table 104 while the build table 104 rotates in the counterclockwise direction R about the axis of rotation 109 and, as the build table 104 continues to rotate the component 102 in the counterclockwise direction R, the feedstock material previously deposited by the deposition head 122 will encounter the load source 144 after being deposited from the deposition head 122. Thus, in the illustrated embodiment, the deposition head 122 acts on a particular portion of the component 102 before the load source 144 acts on that particular portion of the component and, similarly, the load source 144 acts on a particular portion of the component 102 after the deposition head 122 has acted on that particular portion of the component 102. Stated differently, because the build table 104 rotates in the counterclockwise direction R in the illustrated embodiment, the deposition head 122 is positioned before the load source 144 and the load source 144 is positioned after the deposition head 122. In embodiments, the temperature sensor 152 may be positioned between the deposition head 122 and the load source 144 to ensure that the compressive load is applied by the load source 144 at the correct temperature and the stress sensor 154 may be positioned after the load source 144 (in the direction of rotation of the component 102) to determine if the resulting stress is at a desired level (e.g., near zero for a stress-relieving treatment or a negative value if a counterbalancing treatment is being performed to promote grain refinement). In some examples, the temperature sensor 152 may be provided on the deposition assembly 120, for example, proximate the deposition head 122, so as to accurately measure temperature of the melted feedstock material being deposited therefrom. In some examples, the temperature sensor 152 may be provided proximate the load source 144 in addition to or in lieu of the temperature sensor 152 placed proximate the deposition head 122. By monitoring the surface temperature of the component 102 in close proximity of the melt pool 136, the system 100 is able to ensure application of compressive load to portions of the component 102 having substantially uniform temperatures while preceding portions of the stream of melted feedstock material are being simultaneously deposited by the deposition head 122.

In the illustrated example, the system 100 further includes a platform 201 on which the other components of the system 100 are mounted. It should be appreciated, however, that a platform 201 is not required, and one or more of the other components of the system 100 may be secured to the ground surface or floor.

Also in the illustrated example, the compression rig 140 includes a support structure 202 and a positioning arm 204. The support structure 202 includes an upper end 206 and a lower end 207 that is opposite of the upper end 206. The positioning arm 204 is slidably attached to the upper end 206 of the support structure 202 such that the positioning arm 204 may translate relative to the support structure 202 (i.e., in the X-dimension in the coordinate axes depicted in the figure). To facilitate translation, the compression rig 140 may include a first actuator 210 for causing translation of the positioning arm 204 in the directions indicated by arrow 208. While obscured from view, a rail or track mechanism (or other mechanism configured to permit relative sliding movement) may be utilized to couple a bottom surface of the positioning arm 204 to an upper surface of the upper end 206 of the support structure 202. Thus, the first actuator 210 moves the positioning arm 204 through a first degree of freedom that, in the illustrated embodiment, is a translation indicated by the arrow 208; however, the first degree of freedom may correspond to other movements as described herein.

The compression rig 140 further includes a pivot member 212 rotatably supported at an end 214 of the positioning arm 204. In the illustrated example, the end 214 of the positioning arm 204 is configured as a clevis and the pivot member 212 functions as a tang that is rotationally supported within the clevis at the end 214 of the positioning arm 204, such that the pivot member 212 may rotate within and relative to the end 214 of the positioning arm 204. In particular, the pivot member 212 includes a pair of shaft ends (or pins) 218 protruding from opposite sides of the pivot member 212, and the shaft ends 218 are retained within openings defined in the clevis provided at the end 214 of the positioning arm 204. The shaft ends 218 may rotate within their respective openings of the clevis formed on the positioning arm 204, such that the pivot member 212 may rotate about an axis 220 defined by the shaft ends 218.

The compression rig 140 may further include a second actuator 222 configured to rotate the pivot member 212 about the axis 220. The second actuator 222 includes a drive rod 224, and the second actuator 222 is operable to extend or retract the drive rod 224. In the illustrated example, the second actuator 222 is coupled to the positioning arm 204 and the drive rod 224 is coupled to the pivot member 212, such that activation of the second actuator 222 extends or retracts the drive rod 224 to thereby rotate the pivot member 212 about the axis 220 relative to the clevis of the positioning arm 204.

The pivot member 212 supports the load source 144 via one or more slide members 230 and a linear actuator 234. The pivot member 212 may include a plurality of corresponding slots or openings sized to receive the slide members 230. The load source 144 is attached to a lower end 232 of the slide members 230, with the slide members 230 extending upward therefrom to the pivot member 212 within which they are slidably received. Thus, the slide members 230 may slide within the corresponding slots or openings of the pivot member 212 such that the load source 144 may slide towards or away from the pivot member 212. While the illustrated embodiment depicts the load source 144 slidably suspended from the pivot member 212 by four (4) slide members 230, in other embodiments more or less than four (4) slide members 230 may be utilized. For example, the load source 144 may be slidably suspended by one (1) or more slide members 230.

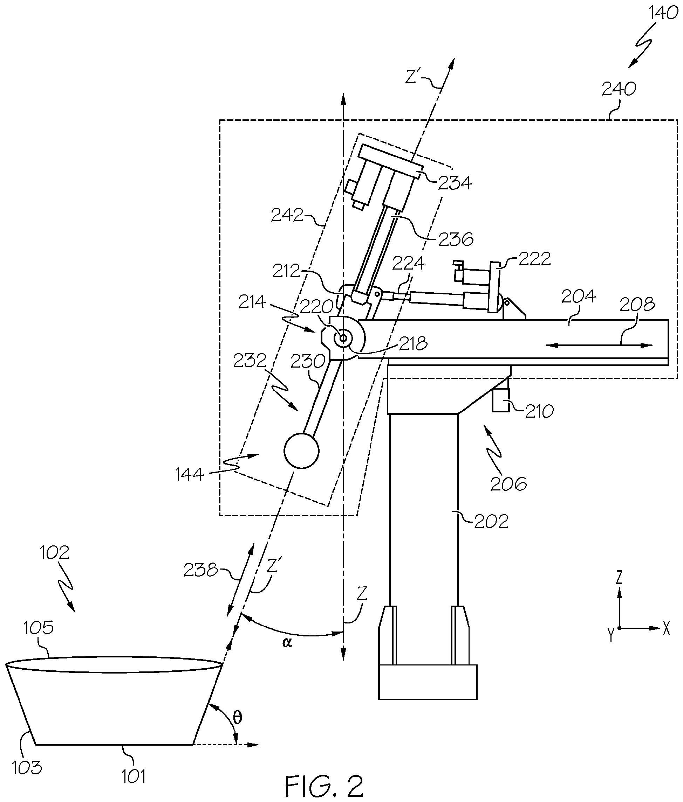

With reference to FIG. 2, the linear actuator 234 is configured to translate the load source 144 along a compression axis Z'. The linear actuator 234 is coupled to the pivot member 212 and includes a drive rod 236 that is coupled to the load source 144. In one example, the drive rod 236 is configured as a screw that is received within a correspondingly threaded bore (obscured from view) provided on the load source 144. Actuation of the linear actuator 234 thereby causes the load source 144 to translate towards or away from the pivot member 212, for example, in a compression direction, as indicated by arrow 238, along the compression axis Z' relative to the pivot member 212. Translation of the load source 144 away from the pivot member 212 (and towards the component 102) may result in application of compression on the component 102, whereas, translation of the load source 144 towards the pivot member 212 (and away from the component 102) may be useful to position the load source 144 as needed to accommodate growth of the component 102 as it is built.

Because the load source 144 is supported by the pivot member 212, rotation of the pivot member 212 about the axis 220 via the second actuator 222 varies or adjusts the angular orientation or attitude of the compression axis Z', relative to a vertical axis Z, along which the load source 144 may apply the compressive load. For example, the second actuator 222 may position the pivot member 212 such that the load source 144 is suspended in an orientation where the compression axis Z' aligns with the vertical axis Z. In this example, the second actuator 222 may rotate the pivot member 212 and the load source 144 suspended therefrom such that the compression axis Z' is oriented at a compression angle α relative to the vertical axis Z. In this manner, the compression rig 140 is able to change orientation of the compression direction indicated by the arrow 238 by the compression angle α relative to the vertical axis Z. The compression angle α at which the compression rig 140 applies the compressive load may be selected to minimize the risk of cracking of the component 102. For example, when the component 102 to be built has an overhanging geometry, as described above, the compression angle α may be selected to be complementary to the inclination angle O. Thus, the compression angle α may be adjusted based on the inclination angle Θ exhibited by the component 102. However, the compression angle a need not align with the inclination angle O exhibited by the component 102. For example, lower layers of the component 102 may exhibit the inclination angle O whereas upper layers may be grown vertically. In these examples, the compression angle α at which the compressive load is applied may be directed slightly inward, rather than vertically, since the component 102 will be stiffest in such slightly inward direction. Here, the compression angle α at which the compressive load is applied to the upper layers need not be complementary to the inclination angle O. Thus, the compression angle α may be selected based on a number of parameters, such as, for example, geometry of the component 102, the stiffness of the deposited material, and the fixture design, etc.

FIG. 2 illustrates an example where the compression rig 140 operates in three (3) degrees of freedom. A first sub-system 240, comprising the positioning arm 204, the pivot member 212, and the load source 144, are all translatable/slidable together in the directions indicated by the arrow 208 via the first actuator 210. A second sub-system 242, comprising the pivot member 212 and the load source 144, are rotatable together about the axis 220, relative to the positioning arm 204, via activation of the second actuator 222. Thus, the second sub-system 242 is operable to adjust the compression angle α independent of translation of the positioning arm 204 in the directions indicated by the arrow 208 via the first actuator 210. Lastly, a third sub-system comprising the load source 144 is translatable to apply the compressive load along the compression axis Z' via activation of the linear actuator 234, relative to any movement of the positioning arm 204 and/or the pivot member 212. Thus, the third sub-system is operable to apply compressive load in the compression direction indicated by the arrow 238, independent of the compression angle α established by the second sub-system 242 and independent of translation of the positioning arm 204 in the directions indicated by the arrow 208 via the first sub-system 240. In this example, each sub-system represents a separate degree of freedom, such that this example embodies an apparatus where the load source 144 has three (3) degrees of freedom.

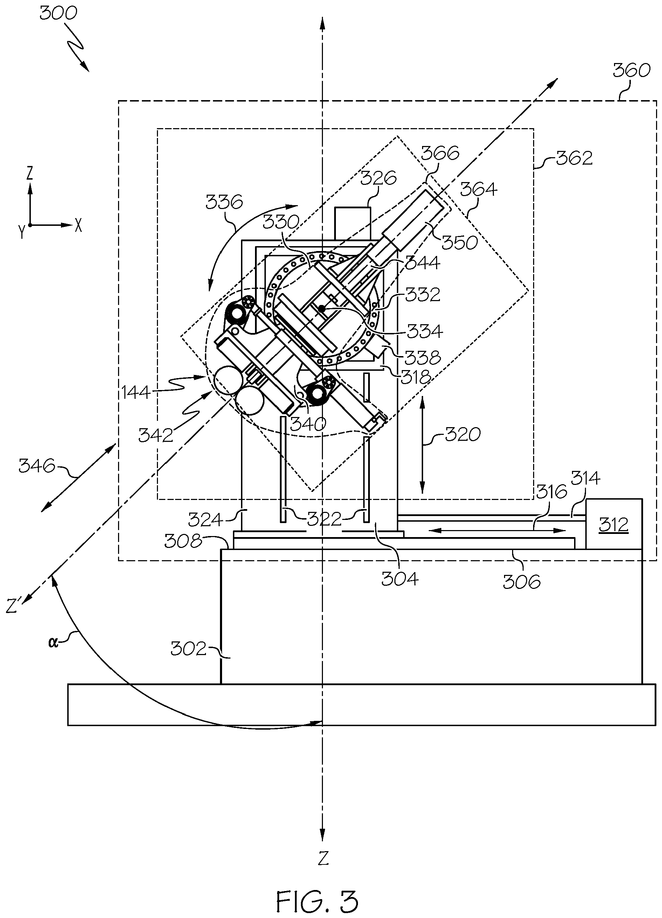

FIG. 3 illustrates another embodiment of a compression rig 300 that may be utilized with the system 100 of FIG. 1, according to one or more embodiments of the present disclosure. The compression rig 300 of FIG. 3 is similar to the compression rig 140 of FIG. 2, except that the load source 144 of the compression rig 300 of FIG. 3 is operable four (4) degrees of freedom as hereinafter described.

In the illustrated embodiment, the compression rig 300 includes a base 302. The base 302 may be positioned proximate to the deposition assembly 120 and the build table 104 (FIG. 1). In embodiments, the deposition assembly 120 may also be provided on the base 302. The compression rig 300 also includes a support structure 304 slidably provided on the base 302. In the illustrated embodiment, tracks 306 are provided on an upper surface 308 of the base 302, and the support structure 304 is configured to slide upon the tracks 306. Here, the support structure 304 may translate on the tracks 306, relative to the base 302, laterally in the X-dimension, as indicated by an arrow 316. Accordingly, the support structure 304 has a bottom surface (obscured from view) that is designed to mate with and ride on the tracks 306 to allow such translation.

In embodiments, the compression rig 300 includes a first actuator 312 arranged to cause translation of the support structure 304 upon the tracks 306 forward or rearward as indicated by the arrow 316. The first actuator 312 may include a drive rod 314 and the first actuator 312 may cause extension or retraction of the drive rod 314 upon activation of the first actuator 312. An end of the drive rod 314 is connected to the support structure 304 such that extension or retraction of the drive rod 314 by the first actuator 312 translates the support structure 304 back or forth as indicated by the arrow 316.

The compression rig 300 also includes a positioning structure 318 slidably provided on the support structure 304. In the illustrated example, the positioning structure 318 is configured to translate in a direction corresponding with the Z-dimension, as indicated by an arrow 320. Here, tracks 322 are attached to a face 324 of the support structure 304, and a rear face (obscured from view) of the positioning structure 318 is configured to ride on the tracks 322 such that the positioning structure 318 may translate vertically in the direction indicated by the arrow 320, relative to the support structure 304 and the base 302. Also, the compression rig 300 may include a second actuator 326 for causing translation of the positioning structure 318 in the direction indicated by the 320.

The compression rig 300 also includes a support member 330. In the illustrated example, the support member 330 is rotatably coupled to the positioning structure 318 via a rotary joint 332 configured to permit rotation of the support member 330 relative to the positioning structure 318 about a rotation axis 334, in a clockwise or counter-clockwise rotational direction as indicated by arrow 336. Also, the compression rig 300 includes a third actuator 338 configured to rotate the support member 330 relative to the positioning structure 318 in either rotational direction indicated by the arrow 336. The third actuator 338 may include a drive gear (obscured from view) that drives a corresponding driven gear (obscured from view) fixed to the support member 330, or the third actuator 338 may include a linear actuator with a drive rod coupled to the support member 330 which causes rotation when extended and/or retracted; however, the third actuator 338 may comprise other actuation mechanisms without departing from the present disclosure.

In embodiments, the load source 144 of the compression rig 300 includes a compression head 340 which contacts the component 102 to apply the compressive load. In the illustrated example, the compression head 340 includes a roller assembly 342. The compression head 340 includes a shaft 344 that is slidably coupled to the support member 330. In particular, the compression head 340 is supported on the shaft 344, and the shaft 344 is slidable within the support member 330 such that the compression head 340 and the shaft 344 may translate along the compression axis Z'. The shaft 344 is slidable relative to the support member 330 in a first or second compression direction, as indicated by an arrow 346. As previously described, the compression axis Z' at which the compressive load is applied is adjustable based on rotation of the support member 330 about the rotation axis 334. Thus, the third actuator 338 may cause rotation of the shaft 344 and the compression head 340 supported thereon, such that the compression axis Z' is oriented at the compression angle α relative to the vertical axis Z. In this manner, not only may the compression rig 300 apply the compressive load perpendicularly, but the compression rig 300 may orient the roller assembly 342 to apply compressive load at the compression angle α relative to the vertical axis Z, whereas existing compression rigs are only able to apply compression in the vertical axis or perpendicular to the build plate.

Also, the compression rig 300 includes a fourth actuator 350 configured to translate the shaft 344 and the compression head 340 supported thereon along the compression axis Z'. The fourth actuator 350 includes a drive rod (obscured from view) and is operable to extend or retract the drive rod. In the illustrated example, the fourth actuator 350 is coupled to the support member 330 and the drive rod is coupled to the compression head 340, such that activation of the fourth actuator 350 extends or retracts the drive rod to thereby translate the roller assembly 342 in the compression direction, as indicated by the arrow 346, along the compression axis Z'.

Because the compression head 340 and the roller assembly 342 are supported by the support member 330, rotation of the support member 330 about the rotation axis 334 via the third actuator 338 varies or adjusts orientation of the compression axis Z' along which the roller assembly 342 may apply the compressive load. For example, the third actuator 338 may position the support member 330 such that the roller assembly 342 is suspended in an orientation where the compression axis Z' aligns with the vertical axis Z; however, the third actuator 338 may be activated to rotate the support member 330, together with the compression head 340 and the roller assembly 342 suspended therefrom, such that the compression axis Z' is oriented at the compression angle α and unaligned with the vertical axis Z. In this manner, the compression rig 300 is able change orientation of the compression direction, as indicated by the arrow 346, by the compression angle α.

As mentioned herein, FIG. 3 illustrates an embodiment where the compression rig 300 operates in four (4) degrees of freedom. A first sub-system 360, comprising the support structure 304, the positioning structure 318, the support member 330, and the compression head 340 and the roller assembly 342, are all horizontally translatable/slidable together in the direction indicated by the arrow 316 via the first actuator 312. A second sub-system 362, comprising the positioning structure 318, the support member 330, and the compression head 340 and the roller assembly 342, are all vertically translatable/slidable together in the direction indicated by the arrow 320 via the second actuator 326. A third sub-system 364, comprising the support member 330 together with the compression head 340 and the roller assembly 342, are rotatable together (in a rotational direction as indicated by the arrow 336) about the rotation axis 334, relative to the positioning structure 318 and the support structure 304, via activation of the third actuator 338. Thus, the third sub-system 364 is operable to adjust the compression angle α independent of the vertical translation of the positioning structure 318 in the direction indicated by the arrow 320 via the second actuator 326 and independent of horizontal translation of the support structure 304 in the direction represented by the arrow 316 via the first actuator 312. Lastly, a fourth sub-system 366, comprising the shaft 344 together with the compression head 340 and the roller assembly 342, is translatable to apply the compressive load along the compression axis Z' via activation of the fourth actuator 350, relative to any movement of the positioning structure 318, the support member 330, and/or the support structure 304. Thus, the fourth sub-system 366 is operable to apply compressive load in the compression direction indicated by the arrow 346, independent of the compression angle α established by the third sub-system 364, independent of any vertical translation of the positioning structure 318 in the direction indicated by the arrow 320 via the second sub-system 362, and independent of any horizontal translation of the support structure 304 in the direction indicated by the arrow 316 via the first sub-system 360. In this example, each sub-system represents a separate degree of freedom, such that this example embodies an apparatus with a compression head having four (4) degrees of freedom.

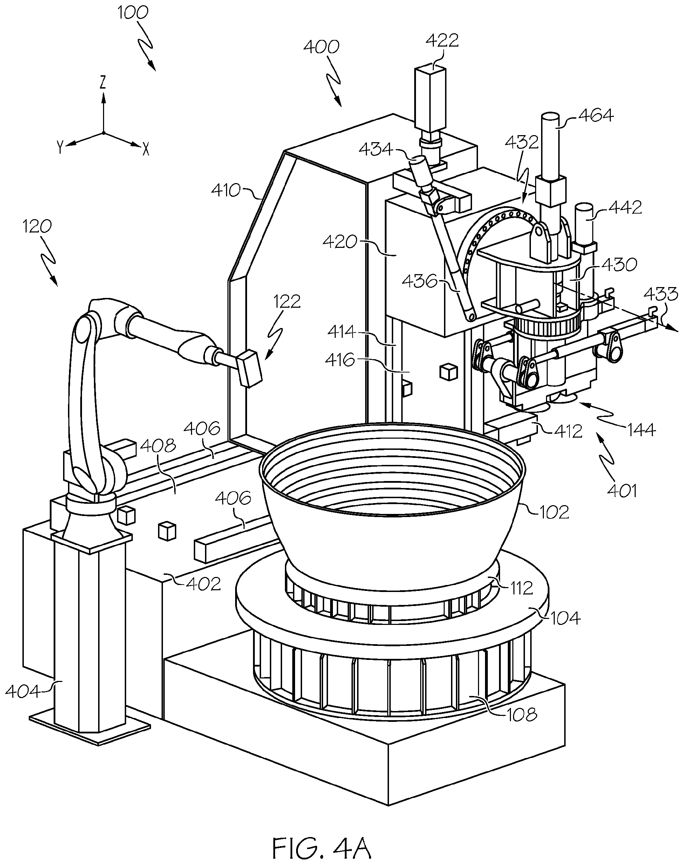

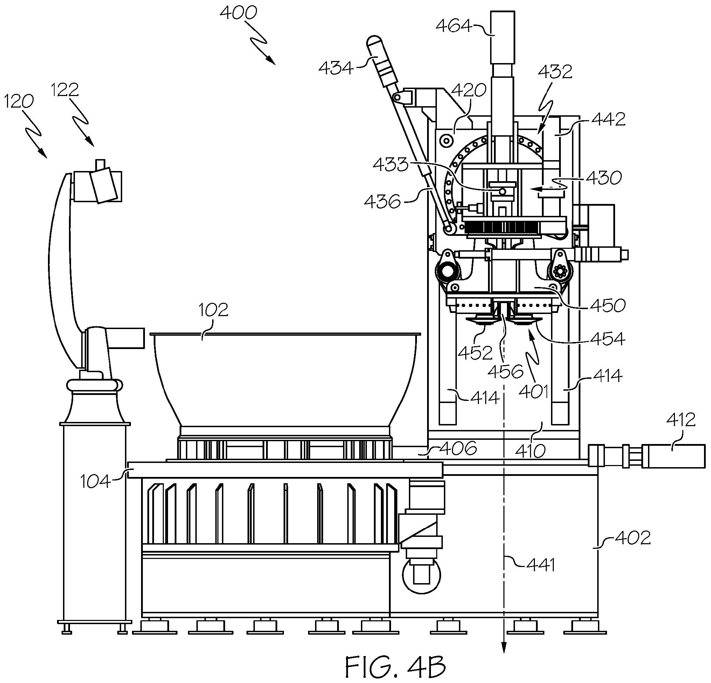

FIGS. 4A-4C illustrate yet another embodiment of a compression rig 400 that may be utilized with the system 100 of FIG. 1, according to one or more embodiments of the present disclosure. In the illustrated example, the compression rig 400 is provided on a base 402 which is positioned proximate to the deposition assembly 120 and the build table 104. In this embodiment, the deposition assembly 120 is provided on its own base structure 404, but in other examples, the deposition assembly 120 may be provided on the base 402 or elsewhere. Also, at least a pair of tracks 406 are provided on an upper surface 408 of the base 402.

The compression rig 400 includes a slidable support structure 410 that is configured to slide upon the tracks 406. As shown, the slidable support structure 410 may translate on the tracks 406, relative to the base 402, laterally in the Y-dimension depicted in the figure. Also, the compression rig 400 includes an actuator 412 arranged to cause translation of the slidable support structure 410 upon the tracks 406 in the Y-dimension. Accordingly, the slidable support structure 410 has a bottom surface (obscured from view) that is designed to mate with and ride on the tracks 406 to allow such translation. Also, at least a pair of tracks 414 are provided on a front surface 416 of the slidable support structure 410.

The compression rig 400 includes a slidable positioning structure 420 that is configured to slide upon the tracks 414. As shown, the slidable positioning structure 420 may translate on the tracks 414, relative to the slidable support structure 410, vertically in the Z-dimension. Also, the compression rig 400 includes an actuator 422 arranged to cause translation of the slidable positioning structure 420 upon the tracks 414 in the Z-dimension. Accordingly, the slidable positioning structure 420 has a rear face (obscured from view) that is designed to mate with and ride on the tracks 414 to allow such translation.

The compression rig 400 includes an adjustable support member 430 that supports the load source 144. Here, the load source 144 of the compression rig 400 includes a compression head 401. The adjustable support member 430 is coupled to the slidable positioning structure 420 via a rotary joint 432. The rotary joint 432 includes a first side/plate attached to the slidable positioning structure 420 and a second side/plate attached to the adjustable support member 430, and the rotary joint 432 is configured to permit relative rotation between the first and second sides/plates, about a rotation axis 433 of the rotary joint 432. Accordingly, the adjustable support member 430 may rotate, relative to the slidable positioning structure 420, about the rotation axis 433 of the rotary joint 432 that, in the illustrated example, is parallel to the X-dimension of the depicted coordinate axes. Also, the compression rig 400 includes an actuator 434 arranged to cause rotation of the adjustable support member 430 about the rotation axis 433 of the rotary joint 432. In the illustrated example, the actuator 434 is supported on the slidable positioning structure 420. The actuator 434 includes a drive rod 436 and actuation of the actuator 434 causes extension or retraction of the drive rod 436 from the actuator 434. A distal end of the drive rod 436 is coupled to the second side/plate of the rotary joint 432. Accordingly, extension or retraction of the drive rod 436 causes relative rotation between the first and second sides/plates of the rotary joint 432, which thereby causes rotation of the adjustable support member 430 about the rotation axis 433 relative to the slidable positioning structure 420.

The compression head 401 is coupled to the adjustable support member 430 via a rotary joint 440. The rotary joint 440 defines a rotation axis 441 that is aligned with the compression axis Z' and, in the illustrate example, is oriented parallel to Z-dimension of the depicted coordinate axes. The rotary joint 440 includes a first side/plate attached to the adjustable support member 430 and a second side/plate attached to the compression head 401, and the rotary joint 440 is configured to permit relative rotation between the first and second sides/plates, about the rotation axis 441 thereof. Accordingly, the compression head 401 may rotate, relative to the adjustable support member 430, about the rotation axis 441 of the rotary joint 440. Also, the compression rig 400 includes an actuator 442 arranged to cause rotation of the compression head 401 about the rotation axis 441 of the rotary joint 440. In the illustrated example, the actuator 442 is supported on the adjustable support member 430. Here, the actuator 442 includes a drive gear (obscured from view) having teeth that mesh with a driven gear 444 fixed on the second side/plate of the rotary joint 440. The actuator 442 causes rotation of its drive gear, and rotation of that drive gear in turn rotates the driven gear 444 and the compression head 401 which is coupled to the driven gear 444 such that they rotate in unison about the rotation axis 441.

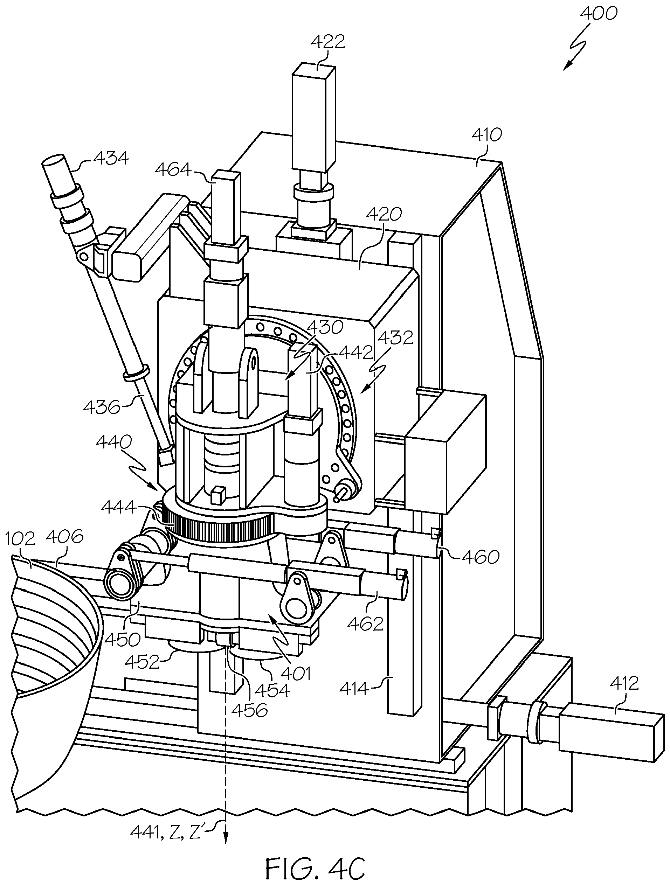

As best seen in FIG. 4C, the compression head 401 may be configured as a roller assembly. In the illustrated example, the compression head 401 includes a frame 450 configured to support the various rollers. The frame 450 is fixed to the driven gear 444 such that it rotates with the driven gear 444 upon actuation of the actuator 442 as described above. As shown, a pair of side rollers 452, 454 are each rotatably coupled to the frame 450 such that each of the side rollers 452, 454 may rotate freely relative to the frame 450 within which they are each otherwise constrained. Further, the frame 450 also supports a top roller 456. The top roller 456 is rotatably coupled to the frame 450 such that it may freely rotate about an axis of rotation thereof. The side rollers 452, 454 may be pinched together or expanded apart via compression actuators 460, 462 which are also supported on the frame 450. In addition, the top roller 456 may be pressed upward or downward along a compression axis via an actuator 464 which may be supported on the adjustable support member 430. In the illustrated example, the compression axis and the rotation axis 441 are co-aligned and oriented as vertical axes. However, as described above with reference to prior examples, the orientation of the compression axis may be adjusted or varied such that it is oriented at a compression angle α relative to the vertical axis, for example, by causing the actuator 434 to rotate the adjustable support member 430 about the rotation axis 433 and thereby angle the compression direction of the compression head 401 relative to vertical.

Any of the compression rigs described herein may be incorporated into a DED additive manufacturing system and utilized when manufacturing a component having an overhanging geometry. For example, the compression rig 400 may be utilized to apply compression to the component 102 having overhanging geometry, wherein the compression is applied in a direction that is non-orthogonal relative to the build surface 106. As described above, the component 102 may exhibit an overhanging geometry when a portion of the component 102, such as the sidewall 103, extends from the base 101 at the inclination angle Θ such that the sidewall 103 overhangs the base 101 by a distance d. When the deposition assembly 120 deposits layers of feedstock material and thereby builds the component 102 that exhibits such overhanging geometry, the compression rig 400 may cause rotation of the adjustable support member 430 about the rotation axis 433 such that the compression axis Z', along which the compression head 401 applies the compressive load, is oriented at the compression angle α, relative to the vertical axis Z, so as to inhibit formation of a moment in the component 102 and inhibit cracking or fracture therein.

Accordingly, embodiments herein are directed towards a method of manufacturing a component having an overhanging geometry, where the overhanging geometry is characterized by a portion of the component extending at an inclination angle relative to a horizontal plane on which a base of the component is provided. The method includes a first step of rotating a build table about an axis of rotation at a rotation speed, the build table defining a horizontal build surface that is perpendicular to the axis of rotation. The method includes a second step of depositing a stream of feedstock material via a deposition head at a deposition rate, wherein continuous deposition of feedstock material during rotation of the build table forms layers of feedstock material that together define the portion of the component extending at the inclination angle. The method also includes a third step of adjusting a compression angle of a compression head based on the inclination angle. The method also includes a fourth step of applying, with the compression head, a compressive load along a compression axis that is oriented at the compression angle. In embodiments, the adjusting of the compression angle occurs in response to determining that the formed layers of feedstock material define the portion extending at the inclination angle. In embodiments, the inclination angle may be determined by a model of the component stored in a memory of a controller and/or sensors that monitor geometry of the component. In embodiments, the method further includes monitoring layers of feedstock material deposited on the build table and, upon determining a change in the inclination angle, further adjusting the compression head to orient the compression axis, along which the compressive load is applied, at a new compression angle that corresponds with the change in the inclination angle. In embodiments, the change in the inclination angle may be determined by a model of the component stored in a memory of a controller and/or sensors that monitor geometry of the component. In embodiments, adjusting the compression angle of the compression head comprises rotating the compression head. In some embodiments, the compression angle is complementary to the inclination angle.

Further aspects of the disclosure are provided by the subject matter of the following clauses:

Clause 1: A compression rig for applying a compressive load to a component being built on a build surface, the compression rig comprising: a support structure; a positioning arm slidably coupled to the support structure; a first actuator operably coupled to and moving the positioning arm, relative to the support structure, through a first degree of freedom; a pivot member rotatably supported on the positioning arm; a second actuator operably coupled to the pivot member, wherein the pivot member is rotatable relative to the positioning arm in a first rotational direction or a second rotational direction opposite the first rotational direction; a compression head slidably coupled to and suspended from the pivot member, the compression head being slidable relative to the pivot member in a first slide direction or a second slide direction opposite the first slide direction; and a third actuator operably coupled to the compression head to translate the compression head in the first slide direction and the second slide direction, and thereby apply the compressive load along a compression axis, wherein the compression head suspended from the pivot member is rotatable by the second actuator to orient the compression axis at a compression angle relative to an axis that is perpendicular to the build surface.

Clause 2: The compression rig of the above clause, further comprising a controller that is communicably coupled to the second actuator to control the compression angle at which the compression head applies the compressive load.

Clause 3: The compression rig of any of the above clauses, wherein the controller adjusts the compression angle based on a geometry of the component.

Clause 4: The compression rig of any of the above clauses, further comprising a base and a fourth actuator, wherein the support structure is slidably coupled on an upper surface of the base and the fourth actuator is operably coupled to the support structure to translate the support structure in a first horizontal direction or a second horizontal direction opposite the first horizontal direction, wherein the first actuator moves the positioning arm vertically in a first direction or a second direction opposite the first direction relative to the support structure.

Clause 5: The compression rig of any of the above clauses, wherein the compression head includes at least one roller arranged to apply the compressive load along the compression axis.

Clause 6: The compression rig of any of the above clauses, wherein the positioning arm comprises a clevis and the pivot member comprises a tang rotatably supported within the clevis of the positioning arm.

Clause 7: The compression rig of any of the above clauses, wherein the component comprises an overhanging geometry characterized by a portion of the component extending at an inclination angle relative to the build surface, wherein the compression angle and the inclination angle of the component are complementary angles.

Clause 8: The compression rig of any of the above clauses, wherein the first actuator translates the positioning arm in a first direction or a second direction opposite the first direction.

Clause 9: An apparatus for applying a compressive load to a component being built on a build surface, comprising: a base; a support structure slidably coupled on an upper surface of the base; a first actuator that translates the support structure in a first horizontal direction or a second horizontal direction opposite the first horizontal direction; a positioning structure slidably coupled to a front side face of the support structure; a second actuator that translates the positioning structure in a first vertical direction or a second vertical direction opposite the first vertical direction; a support member rotatably coupled to the positioning structure via a rotary joint, wherein the support member is rotatable relative to the positioning structure; a third actuator that rotates the support member relative to the positioning structure in a first rotational direction or a second rotational direction opposite the first rotational direction; a compression head slidably coupled to the support member, the compression head being slidable relative to the support member in a first or second slide direction; and a fourth actuator that translates the compression head to thereby apply a compressive load along a compression axis, wherein the compression head suspended from the support member is rotatable by the third actuator to orient the compression axis at a compression angle relative to an axis that is perpendicular to the build surface.

Clause 10: The compression rig of any of the above clauses, further comprising a controller communicably coupled to the third actuator to control the compression angle at which the compression head applies the compressive load

Clause 11: The compression rig of any of the above clauses, wherein the controller adjusts the compression angle based on a geometry of the component.

Clause 12: The compression rig of any of the above clauses, wherein the controller is also communicably coupled to the first actuator, the second actuator, and the fourth actuator, wherein the controller adjusts operation of any one or more of the first actuator, the second actuator, and the fourth actuator based on a geometry of the component.

Clause 13: The compression rig of any of the above clauses, further comprising at least one track provided on the upper surface of the base, wherein the support structure includes a bottom surface that engages and slides upon the at least one track of the base.

Clause 14: The compression rig of any of the above clauses, further comprising at least one track provided on the front side face of the support structure, wherein a rear side face of the positioning structure facing the front side face of the support structure engages and slides upon the at least one track of the support structure.

Clause 15: The compression rig of any of the above clauses, wherein the third actuator extends or retracts a drive rod upon activation of the third actuator, wherein the third actuator is coupled to the positioning structure and the drive rod of the third actuator is coupled the support member such that extension of the drive rod rotates the support member, relative to the positioning structure, in the first rotational direction and retraction of the drive rod rotates the support member, relative to the positioning structure, in the second rotational direction.

Clause 16: The compression rig of any of the above clauses, wherein the component comprises an overhanging geometry characterized by a portion of the component extending at an inclination angle relative to a horizontal plane, wherein the compression angle and the inclination angle of the component are complementary angles.

Clause 17: The compression rig of any of the above clauses, wherein the compression head includes at least one roller arranged to apply the compressive load along the compression axis.

Clause 18: A method of manufacturing a component having an overhanging geometry, the overhanging geometry characterized by a portion of the component extending at an inclination angle, the method comprising: rotating a build table about an axis of rotation at a rotation speed, the build table defining a build surface, the axis of rotation being perpendicular to the build surface; depositing a stream of feedstock material via a deposition head at a deposition rate, wherein continuous deposition of feedstock material during rotation of the build table forms layers of feedstock material that together define the portion of the component extending at the inclination angle relative to the build surface; adjusting a compression angle of a compression head based on the inclination angle, wherein the compression head applies a compressive load along a compression axis oriented at the compression angle, and wherein the compression angle is defined between the compression axis and an axis that is perpendicular to the build surface; and applying, with the compression head, the compressive load along the compression axis oriented at the compression angle.

Clause 19: The method of any of the above clauses, wherein the adjusting of the compression angle occurs in response to determining that the formed layers of feedstock material define the portion extending at the inclination angle.

Clause 20: The method of any of the above clauses, further comprising: monitoring layers of feedstock material deposited on the build table and, upon determining a change in the inclination angle, further adjusting the compression head to orient the compression axis, along which the compressive load is applied, at a new compression angle that corresponds with the change in the inclination angle.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A compression rig (140) for applying a compressive load to a component (102) being built on a build surface (106), the compression rig (140) comprising:
a support structure (202);
a positioning arm (204) slidably coupled to the support structure (202);
a first actuator (210) operably coupled to and moving the positioning arm (204), relative to the support structure (202), through a first degree of freedom;
a pivot member (212) rotatably supported on the positioning arm (204);
a second actuator (222) operably coupled to the pivot member (212), wherein the pivot member (212) is rotatable relative to the positioning arm (204) in a first rotational direction or a second rotational direction opposite the first rotational direction;
a compression head (340) slidably coupled to and suspended from the pivot member (212), the compression head (340) being slidable relative to the pivot member (212) in a first slide direction or a second slide direction opposite the first slide direction; and
a third actuator (234) operably coupled to the compression head (340) to translate the compression head (340) in the first slide direction and the second slide direction, and thereby apply the compressive load along a compression axis (Z'),
wherein the compression head (340) suspended from the pivot member (212) is rotatable by the second actuator (222) to orient the compression axis (Z') at a compression angle (α) relative to an axis that is perpendicular to the build surface (106).

2. The compression rig (140) of claim 1, further comprising a controller (150) communicably coupled to the second actuator (222) to control the compression angle (α) at which the compression head (340) applies the compressive load, wherein the controller (150) adjusts the compression angle (α) based on a geometry of the component (102).

3. The compression rig (140) of any one of claims 1-2, further comprising a base (302) and a fourth actuator (312), wherein the support structure (202) is slidably coupled on an upper surface (308) of the base (302) and the fourth actuator (312) is operably coupled to the support structure (202) to translate the support structure (202) in a first horizontal direction or a second horizontal direction opposite the first horizontal direction, wherein the first actuator (210) moves the positioning arm (204) vertically in a first direction or a second direction opposite the first direction relative to the support structure (202).

4. The compression rig (140) of any one of claims 1-3, wherein the compression head (340) includes at least one roller (342) arranged to apply the compressive load along the compression axis (Z').

5. An apparatus (400) for applying a compressive load to a component (102) being built on a build surface (106), comprising:
a base (402);
a support structure (410) slidably coupled on an upper surface (408) of the base (402);
a first actuator (412) that translates the support structure (410) in a first horizontal direction or a second horizontal direction opposite the first horizontal direction;
a positioning structure (420) slidably coupled to a front side face (416) of the support structure (410);
a second actuator (422) that translates the positioning structure (420) in a first vertical direction or a second vertical direction opposite the first vertical direction;
a support member (430) rotatably coupled to the positioning structure (420) via a rotary joint (432), wherein the support member (430) is rotatable relative to the positioning structure (420);
a third actuator (434) that rotates the support member (430) relative to the positioning structure (420) in a first rotational direction or a second rotational direction opposite the first rotational direction;
a compression head (401) slidably coupled to the support member (430), the compression head (401) being slidable relative to the support member (430) in a first slide direction or a second slide direction; and
a fourth actuator (464) that translates the compression head (401) to thereby apply a compressive load along a compression axis (Z'), wherein the compression head (401) suspended from the support member (430) is rotatable by the third actuator (434) to orient the compression axis (Z') at a compression angle (α) relative to an axis that is perpendicular to the build surface (106).

6. The apparatus (400) of claim 5, further comprising a controller (150) communicably coupled to the third actuator (434) to control the compression angle (α) at which the compression head (401) applies the compressive load, wherein the controller (150) adjusts the compression angle (α) based on a geometry of the component (102).

7. The apparatus (400) of claim 6, wherein the controller (150) is also communicably coupled to the first actuator (412), the second actuator (422), and the fourth actuator (464), wherein the controller (150) adjusts operation of any one or more of the first actuator (412), the second actuator (422), and the fourth actuator (464) based on a geometry of the component (102).

8. The apparatus (400) of any one of claims 5-7, further comprising at least one track (406) provided on the upper surface (408) of the base (402), wherein the support structure (410) includes a bottom surface that engages and slides upon the at least one track (406) of the base (402).

9. The apparatus (400) of any one of claims 5-8, further comprising at least one track (414) provided on the front side face (416) of the support structure (410), wherein a rear side face of the positioning structure (420) facing the front side face (416) of the support structure (410) engages and slides upon the at least one track (414) of the support structure (410).

10. The apparatus (400) of any one of claims 5-9, wherein the third actuator (434) extends or retracts a drive rod (436) upon activation of the third actuator (434), wherein the third actuator (434) is coupled to the positioning structure (420) and the drive rod (436) of the third actuator (434) is coupled the support member (430) such that extension of the drive rod (436) rotates the support member (430), relative to the positioning structure (420), in the first rotational direction and retraction of the drive rod (436) rotates the support member (430), relative to the positioning structure (420), in the second rotational direction.

11. The apparatus (400) of any one of claims 5-10, wherein the compression head (401) includes at least one roller (452, 454, 456) arranged to apply the compressive load along the compression axis (Z').

12. A method of manufacturing a component (102) having an overhanging geometry, the overhanging geometry **characterized by** a portion of the component (102) extending at an inclination angle (Θ), the method comprising:
rotating a build table (104) about an axis of rotation at a rotation speed, the build table (104) defining a build surface (106), the axis of rotation being perpendicular to the horizontal build surface (106);
depositing a stream of feedstock material via a deposition head (122) at a deposition rate during rotation of the build table (104) to form layers of feedstock material that together define the portion of the component (102) extending at the inclination angle (Θ) relative to the build surface (106);
adjusting a compression angle (α) of a compression head (401) based on the inclination angle (Θ), wherein the compression head (401) applies a compressive load along a compression axis (Z') oriented at the compression angle (α), and wherein the compression angle (α) is defined between the compression axis (Z') and an axis that is perpendicular to the build surface (106); and
applying, with the compression head (401), the compressive load along the compression axis (Z') oriented at the compression angle (α).

13. The method of claim 12, wherein the adjusting of the compression angle (α) occurs in response to determining that the formed layers of feedstock material define the portion extending at the inclination angle (Θ).

14. The method of any one of claims 12-13, further comprising:
monitoring layers of feedstock material deposited on the build table (104) and, upon determining a change in the inclination angle (Θ), further adjusting the compression head (401) to orient the compression axis (Z'), along which the compressive load is applied, at a new compression angle (α) that corresponds with the change in the inclination angle (Θ).

15. The method of any one of claims 12-14, wherein the compression angle (α) is complementary to the inclination angle (Θ).
